# EUROPEAN PATENT APPLICATION

(11) **EP 3 392 501 A1**
(43) Date of publication of application: **24.10.2018**
(21) Application number: 16836081.6
(22) Date of filing: 13.12.2016
(51) Int. Cl.: F03D 1/06, F03D 80/50, B29C 65/02

(54) **INNER COVERING FOR WIND TURBINE BLADES AND METHOD FOR MOUNTING SAME**

(30) Priority: 17.12.2015 ES 201531829
(71) Applicant: Emprending Business, S.L.L., 31620 Gorraiz (ES)
(72) Inventor: GARCIA DE LA PEÑA RAZQUIN, Emmanuel, 31620 Gorraiz (ES)
(74) Representative: Cabinet Plasseraud
(86) International application number: PCT/ES2016/070885
(87) International publication number: WO 2017/103308

(57) **Abstract**

Inner covering for wind turbine blades and method for mounting thereof, wherein said covering consists of wall cover (5) with a flexible wall, which is formed based on layers of composite materials, having shapes and dimensions being approximately the same as those of the inner area of the blade structural element (3), said cover being mounted on a support (16) with which it is introduced inside the blade. Between the support and the cover, an inflatable chamber (18) is arranged that upon being inflated causes the cover be compacted and adhered against the inner surface of the blade structural element.

## Description

### Field of the invention

The present invention refers to an inner covering for wind turbine blades, particularly applicable to blades being damaged due to the fatigue they have undergone after years of operation, the purpose of which is to extend the blades service life beyond the service period they were intended for. It is also an object of the invention a method for mounting the covering in a wind turbine blade.

### Background of the invention

The wind turbine blades are usually designed for 20 years' service life. This service life is conditioned by different compression and traction cycles to which the composite materials of the blade structural element are subjected to (a beam in case of blades manufactured by means of fibre and resin pre-impregnation (prepreg) method, or the reinforced shell itself in the case of blades manufactured by means of the infusion method). These traction and compression cycles, resulting from the blade flexion during the wind turbine operation, produce a fatigue in said composite materials which leads to a blade fracture when it exceeds the cycles it has been designed for.

Currently, when the blade exceeds the cycles it has been designed for, or in other words the service life thereof, it is replaced by a new one or a re-manufactured one, the remaining life of which justifies the cost for the replacement.

In order to solve the problem set forth, there is no other solution known but replacing, with a new blade, the blade which has reached the end of the service life thereof due to fatigue.

There are systems for reinforcing a particular area weakened due to the existence of a design/manufacture problem or due to damage generated by an accident, as that described in ES2461390, wherein a system is defined for reinforcing the weakened area of a wind turbine blade, with said blade being mounted in the wind turbine.

On the other hand, the system object of ES2461390 is only applicable to blades of a beam-shell structure and to blades of the infusion type.

According to the system in ES2461390 reinforcements must be cured before being applied onto the blade area to be reinforced, which leads to problems regarding adaptation to the surface to be reinforced, and furthermore, they require motor-driven positioning equipment, for the introduction and transport thereof through the blade to the area where the reinforce must be applied.

### Description of the invention

The object of the present invention is to provide an inner covering for wind turbine blades, as well as the method for mounting thereof inside a wind turbine blade, which solves the problems stated above and allows reinforcement of the entire blade, thus guaranteeing an extension of the service life thereof.

According to the invention, the covering consists of a flexible wall cover, featuring shapes and dimensions which are approximately the same as those corresponding to the inner area of the structural element of the blade for which the covering is intended, from the root to the tip, and being open at the root thereof. This cover is constituted by pre-cut fabric layers made of composite materials, based on glass or carbon fibre and resins, being not cured or only partially cured, which are applied, fixed and cured onto the inner surface of the structural element of the blade.

The cover may be obtained in a single piece or in two longitudinal halves.

According to another characteristic of the invention, the cover wall extends, from the open root, in a peripheral outer channel, as a neck.

The method consists of applying the cover, constituting the cited covering, inside a blade onto the structural element thereof, the materials of which have lost its mechanical properties for being near or having exceeded their the service life.

This cover is added onto the inner surface of the blade structural element, being thus adhered to the surfaces being damaged due to fatigue, providing the blade assembly with similar mechanical properties to those it originally featured, thereby allowing the service life thereof to be extended for a period of time which is enough to justify the cost of this action.

In the case of blades manufactured with prepreg materials, the supplementary cover is adhered to the inner faces of the beam supporting the bending moments and working as structural element (these faces are referred to as CAPS). After the supplementary cover is adhered to the CAPS, this supplementary cover will perform the function of supporting and transmitting forces to the blade root, and from there to the hub of the wind turbine.

In the case of blades manufactured by the infusion method, the cover will be adhered to the inner faces of the reinforced shells, which in this type of technology act as structural element and as conducting thread for the loads into the hub.

The sections and materials of the cover will be calculated and designed so as to provide the blade with the mechanical properties required for the correct operation thereof under optimum safety conditions, for the period of time in which the service life thereof is extended.

The cover will preferably be made of composite materials, glass fibre with resin or carbon fibre with resin.

In the preferred embodiment, the cover, being made of glass or carbon fibre, wraps the interface between the blade root and the hub with a kind of neck in the form of an outer peripheral channel, which overlaps the blade wall on the outside in a length being enough for the blade connecting bolts to go therethrough. This cover will have such a dimension as to cover the entire length of the blade inside, up to the tip or end thereof.

According to the method of the invention the flexible wall cover is formed over a preforming mould, featuring shapes and dimensions being approximately the same as those inside the blade structural element, from the open root thereof to the end or tip thereof. This cover is formed by pre-cut fabric layers of composite materials, preferably based on glass or carbon fibres and resins, being not cured or only partially cured.

On the other hand, blasting and cleaning is performed in the inner surface of the blade and the formed cover is introduced therein. For that purpose, the cover in mounted on an implement or support which is introduced with the cover inside the blade, through the open root, until it reaches the tip. An inflatable chamber is arranged between the implement or support and the cover that, upon being inflated, is capable of reaching the inner volume of the structural element of the blade, with the shapes and dimensions thereof, and it is introduced in the blade. By pressurizing the inflatable chamber the cover is compacted against the inner surface of the structural element of the blade, until said cover acquires the inner shapes thereof and adheres thereto.

The following step is the blowing of hot air through the blade, until curing and hardening is produced of the composite materials forming the cover, as well as the adherence thereof onto the inner surface of the structural element of the blade.

For introducing and moving the implement or support through the blade, it is pulled using cables passing through orifices which are made in the tip or end of the blade and which are closed once this process is finished.

Preferably, the cover finishes off, in the open root thereof, in a neck, in the form of an outer peripheral channel, which couples to the edge of the blade wall limiting the open root thereof, thus overlapping said wall on the outside in a length that is enough for the connecting bolts to go therethrough.

The cover may be formed as a single piece or it may be longitudinally divided into two or more parts which are introduced in the blade mounted on the implement or support, with the inflatable chamber being interposed, as it has been described.

The cover is attached to the inner surface of the structural element of the blade by means of the resin of the composite material forming the cover and, if necessary, by adding a reinforcing adhesive.

As a preferred embodiment, it can be used as a mould the inner area of the blade the service life of which is intended to be extended. In order to do so, the process will start with an operation for performing blasting and cleaning inside the blade structural element, so as to guarantee a correct adhesiveness of the cover. Then the pre-cut fabrics made of composite material, without being cured or being only pre-cured but still flexible, inside the blade intended to be repaired, by means of cables, making small orifices in the tip. Other mounting implements or supports are possible. The pre-cut fabrics may be adhered on the inner surface of the structural element with its own resin, or if necessary a reinforcing adhesive will be applied. Once this is done, the fabrics will be compacted by introducing an inflatable chamber or sleeve into the inner area of the blade, which will be subsequently pressurized for the fabrics to be suitably compacted. Meanwhile, hot air is blown until the composite materials are completely cured and hardened. Thus, the fabrics are adhered the nearest possible to the inner contour of the structural element of the blade, thus allowing a correct operation of the adhered surfaces against shear, traction and compression.

Laying down the supplementary cover will be preferably performed in the wind farm, near the wind turbine base so as to minimize special transport operations.

In those blades having a balancing block adhered inside the structural element, it will be necessary to remove said block before carrying out with installation of the covering object of this invention.

This removal will require prior separation of the balancing block from the walls of the blade structural element, an operation which can be performed detaching the block by applying heat or by cutting the adhesive layer attaching the block to the surface of the structural element, and subsequently pulling said block for removal thereof through the open root of the blade.

### Brief description of the drawings

The annexed set of drawings show a non-limitative embodiment, wherein:
- Figure 1 shows a perspective view of a wind turbine blade.
- Figure 2 shows a longitudinal section of the same blade, according to the cutting line II-II of figure 1.
- Figure 3 is a similar section to that in figure 2, showing a blasting and cleaning phase of the inner surface of the blade.
- Figure 4 shows a perspective view of a possible embodiment of a covering in the form of a cover divided into two parts, for a twin turbine blade.
- Figure 5 shows a perspective view of the pre-formed mould used when forming the cover from figure 4.
- Figure 6 shows, using a longitudinal section of the blade, the mounting phase of the cover inside thereof.
- Figure 7 is a similar view to that of figure 6, wherein the cover has been introduced up to the tip, and the phase for compacting and attaching the cover onto the inner surface of the blade is shown.
- Figure 8 shows a side section of a wind turbine blade similar to that of figure 2, incorporating in this case a balancing block bonded to the beam at the inner side thereof.
- Figure 9 shows a perspective view of the balancing block, outside the blade, with the implement for removal thereof.
- Figure 10 is a schematic perspective view of the whole implement for removal of the balancing block.

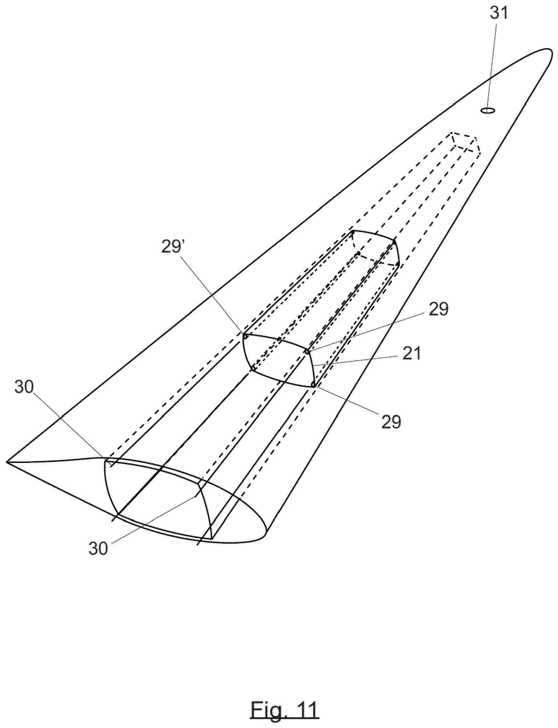

- Figures 11 to 14 show different steps of the process for removing the balancing block, by means of heat application.

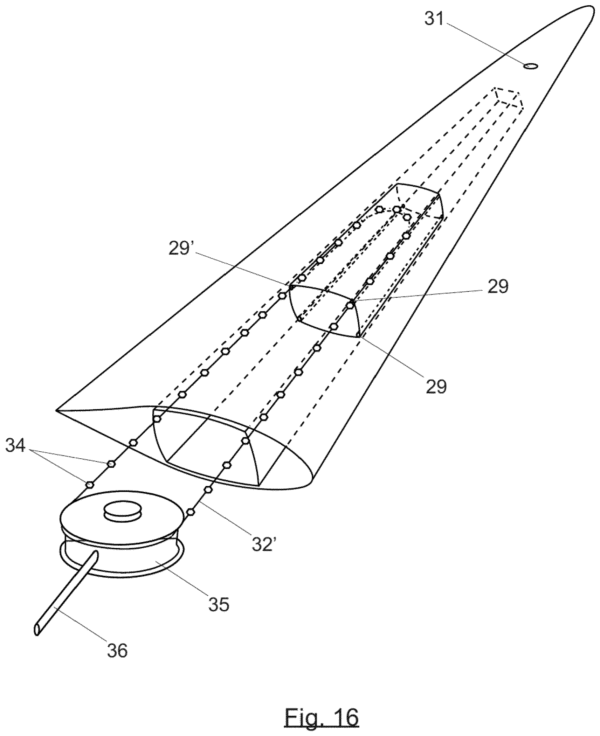

- Figures 15 and 16 show two successive steps of the process for removing the balancing block, by cutting the adhesive layer attaching said block to the beam.
- Figures 17 and 18 show a possible embodiment of the process for removing the balancing block by means of heat application.

### Detailed description of an embodiment

The characteristics of the invention will be better understood with the following description of the embodiment shown in the above listed drawings.

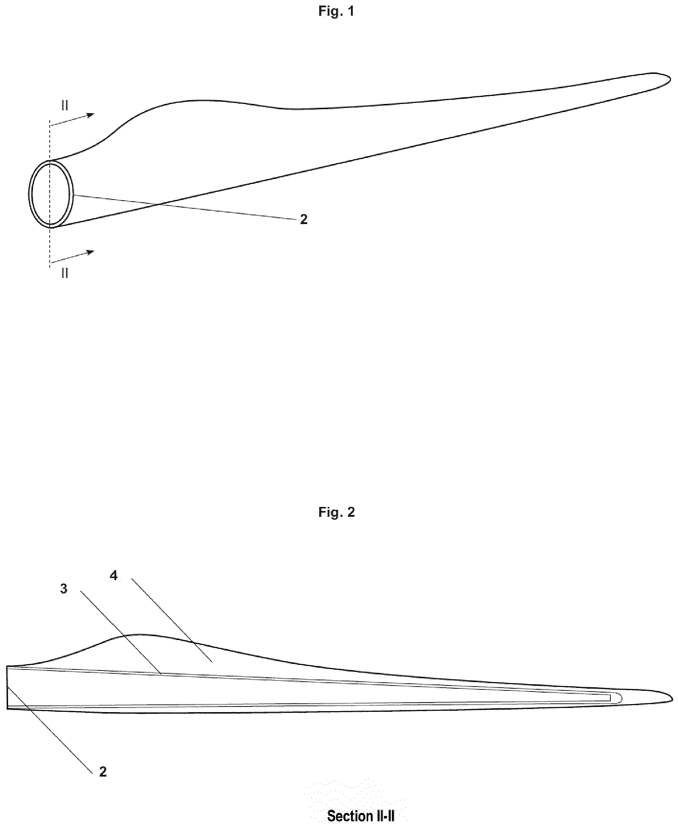

Figures 1 and 2 show a wind turbine blade, open at the root (2) thereof, of the type being manufactured using pre-impregnated (prepeg) composite materials (usually glass or carbon fibre with an epoxy resin), and comprising a structural element (3) referred to as beam, and a shell (4).

The method of the invention is based on placing a reinforcement cover inside the blade, which in the case of blades manufactured with prepreg materials, will adhere to the inner faces of the structural element (3) or beam supporting the bending moments. In the case of blades manufactured by infusion, the cover will adhere the inner surfaces of the reinforced shells.

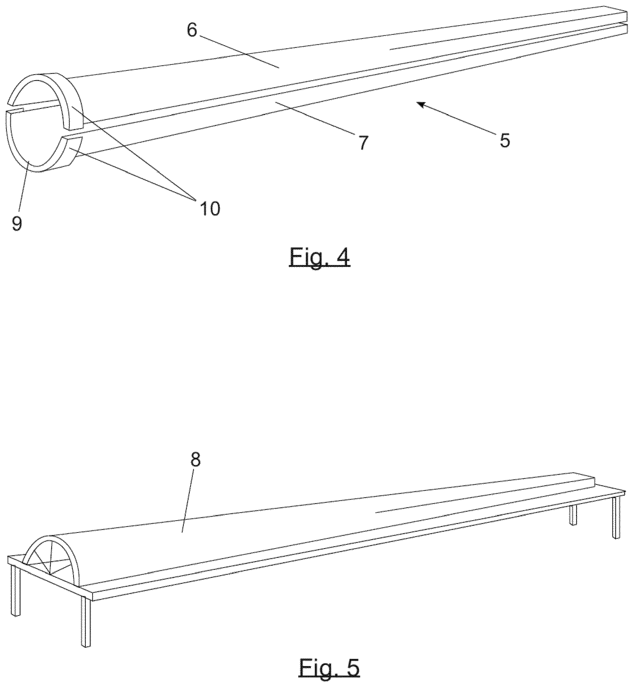

Figure 4 shows a cover (5) for the purpose set forth, longitudinally divided into two parts (6 and 7), each one of which is obtained in a pre-forming mould (8), figure 5, by means of pre-cut fabric layers made of composite materials. The cover (5) also has the root (9) thereof being open, and adjacent to this open root, the cover wall extends forming an outer peripheral channel (10).

The cover (5) is introduced in the blade (1) through the open root (2) thereof, and it couples and fixes to the inner surface of the structural element (3).

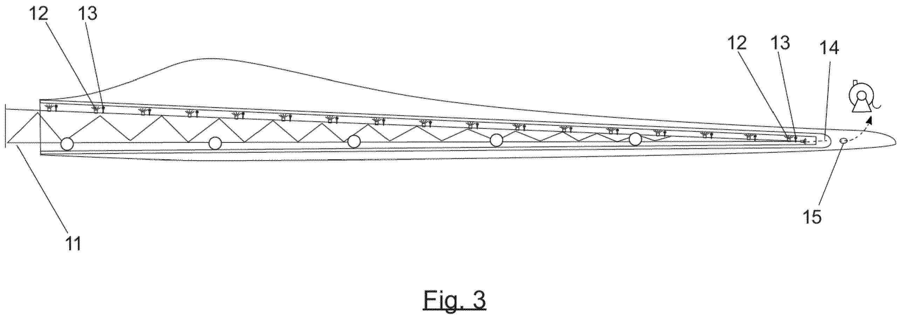

Before mounting the cover (5) in the blade (1), the inner surface of the structural element thereof is cleaned, operation which can be performed with an implement (11), figure 3, comprising blasting (12) and cleaning (13) nozzles. This implement may be introduced in the blade (1) by pulling with cables (14) which are passed through orifices (15) made in the tip of the blade (1).

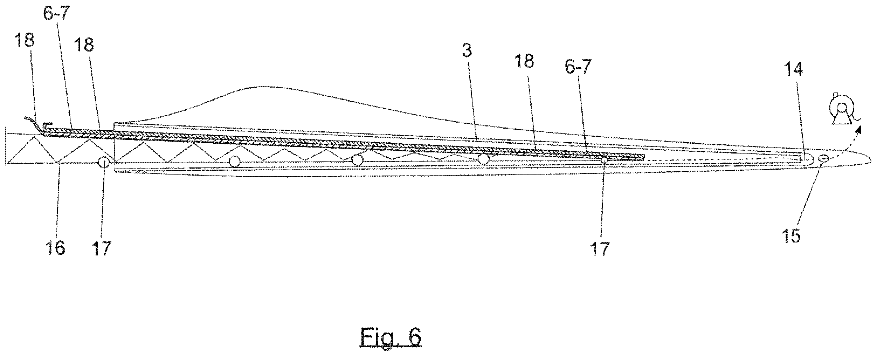

In order to couple the cover (5) inside the blade (1), the parts (6 and 7) forming said cover are mounted in an implement or support (16), figure 6, which can be introduced in the blade in a similar manner as that described for the implement (11), that is, pulling with the cables (14) passed through orifices made near the tip of the blade (1). In order to make this operation easier, the support or implement (16) may be provided with wheels (17). Between the implement (16) and the parts (6 and 7) of the cover an inflatable bag or chamber (18) is arranged.

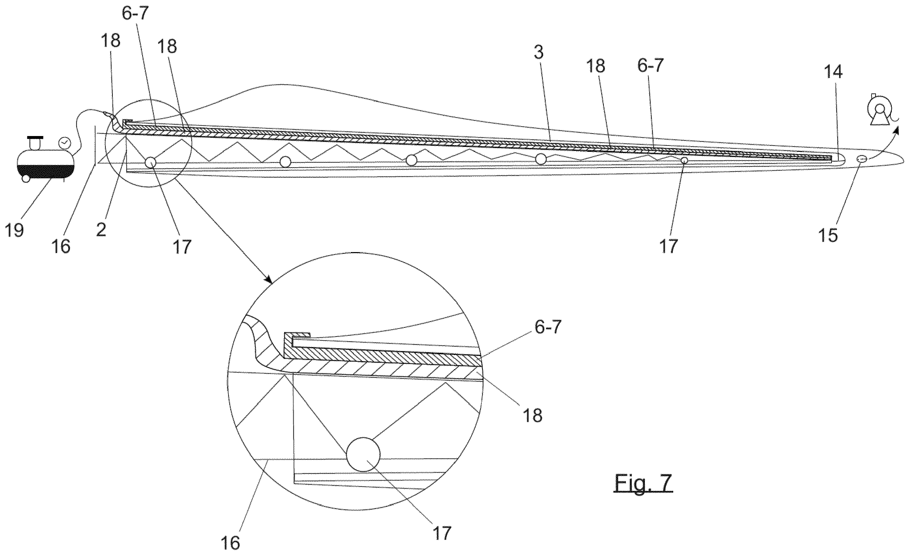

Once the implement (16) has reached the correct position thereof inside the blade, figure 7, the inflatable bag or chamber (18) is inflated, for example by means of a compressor (19). With this operation it is achieved that parts (6 and 7) of the cover are compacted against the inner surface of the structural element (3) of the blade, until they couple completely onto that surface. Lastly, curing process takes place for the fabrics forming the parts (6 and 7) of the cover, as well as adherence to the inner surface of the blade. A reinforcing adhesive can be used, if necessary.

This operation can be performed by blowing hot air through the open root of the blade or by including electric heating blankets outside the shells (4) at the area where they adhere to the structural element (3) or between the inflatable chamber (18) and the composite material fabrics forming the cover (5) or parts (6) and (7) of said cover.

In case the cover is made up of two parts (6 and 7), once mounted in the blade in the manner described, one of the parts (6 or 7) of the cover, the blade is rotated (1), and the same procedure is followed for mounting the other part (7 or 6) of the cover.

Finally, the orifices (15) made for pulling the cables (14) are closed.

The cover may be made up of one, two or more parts.

In another embodiment, the inner area of the blade itself intended to be reinforced can be used as the mould for forming the cover.

The outer peripheral channel (10) of the cover, figure 4, is coupled over the edge of the wall of the blade adjacent to the open root (2) thereof, for it to be passed through by the bolts connecting said blade to the rotor hub of the wind turbine.

The cover constituting the blade reinforcement is also applicable to blades manufactured by infusion, wherein the structural element (beam) and the shell are fused in a single element.

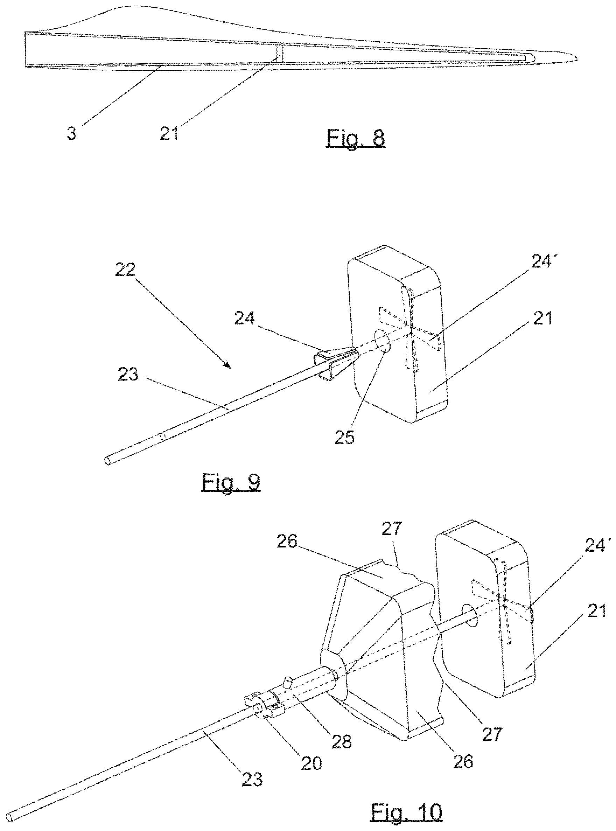

In beams (3) having a balancing block (21), figure 8, the balancing block (21) is adhered to the inner area of the beam (3) in a determined radius and with a pre-established weight so that the rotor is not unbalanced when it rotates.

In order to carry out with the method of the invention, it will be required to first remove the balancing block. The removal of this block can be performed by applying heat to the balancing block surfaces, until exceeding the degradation temperature of the adhesive bonding said block to the beam walls, or else by means of cutting processes of the adhesive layer attaching the block to the beam walls. According to a possible embodiment, the balancing block (21) removal by cutting the adhesive layer attaching said block to the walls of the beam (3) can be realized with an implement (22) as that represented in figures 9 and 10, comprising a central rod (23) with arms (24) being articulated to one of the ends thereof, those arms being capable of tilting between a folded position, shown by means of a solid line in figure 9, and an unfolded position, shown with a broken line in the same figure with the reference (24').

The implement with the arms (24) being folded can pass through the central passage (25) of the balancing block (24'). Then, upon pulling the central rod (23) the block is removed.

Since the balancing block (21) is adhered to the inner surface of the beam (3), in order to remove said block it will be necessary to separate it from the beam first. With that purpose, the implement can be combined with a set of slice bars (26) which are mounted around the central rod (23), being capable of moving along thereof, and defining a contour which is the same to the internal one in the beam (3), having a sharp edge (27) directed towards the arms (24). Behind the slice bars and related thereto, a hollow actuating cylinder (28) is arranged which reacts over a blocking element (20) operating integrally to the rod (23) when the cylinder is activated (28). For the sake of clarity, the method would have the following stages:
1. The rod (23) is introduced through the orifice (25) until their arms open into position (24') and are left in contact the balancing block (21)
2. The rod (23) is pulled until the arms open into the position (24') and they are in contact with the balancing block (21).
3. The set comprising the blocking element (20), the cylinder (28) and the set of slice bars (26) is brought nearer until it contacts the other side of the balancing block (21).
4. The blocking element is activated (20) so that it operates integrally to the rod (23)
5. The cylinder (28) is activated, the plunger of which has a stroke being equivalent to the block thickness.
6. The cylinder plunger (28) pushes the slice bars (26) between the balancing block (21) and the inner face of the beam (3) until breaking the adhesive that fixes said block to the inner face of the beam.

In order to remove the balancing block (21), the implement (22) is introduced through the passage (25) and unfolds the arms (24) up to the position (24'). Then, the cylinder (28) is activated so as to displace the set of slice bars (26) until they are inserted between the balancing block (21) and the inner surface of the beam (3), separating the balancing block, situation from which, by pulling the central rod (23), with the arms (24') being unfolded, it moves along said balancing block until it reaches the outer area of the blade.

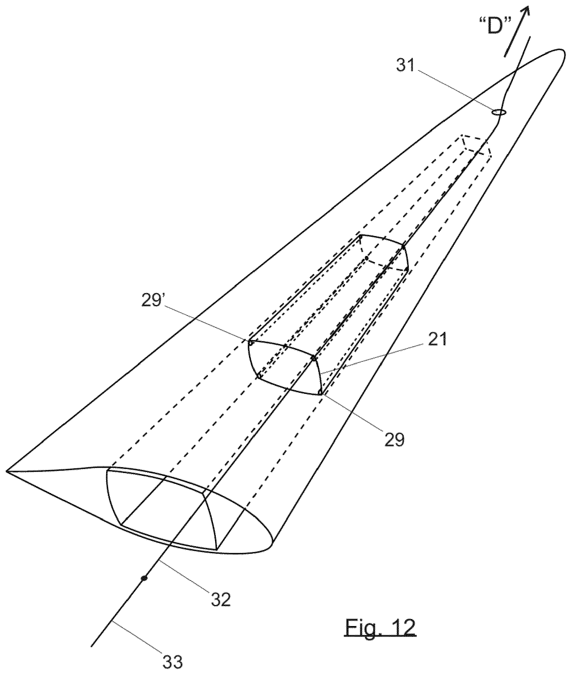

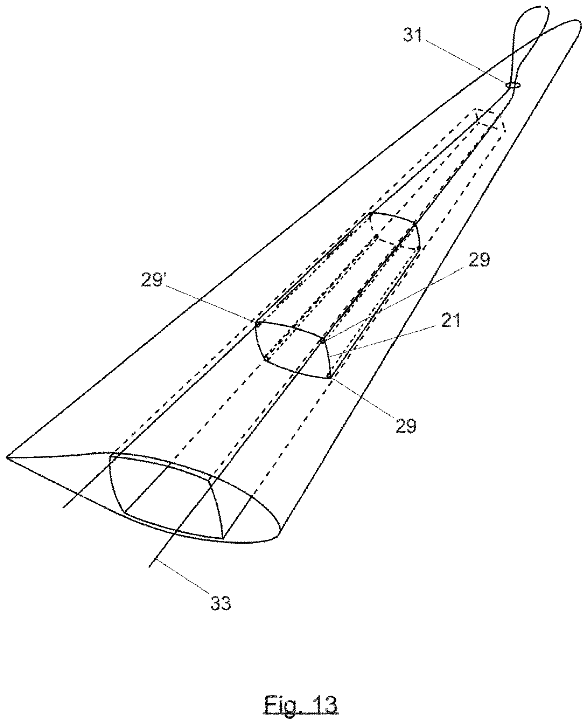

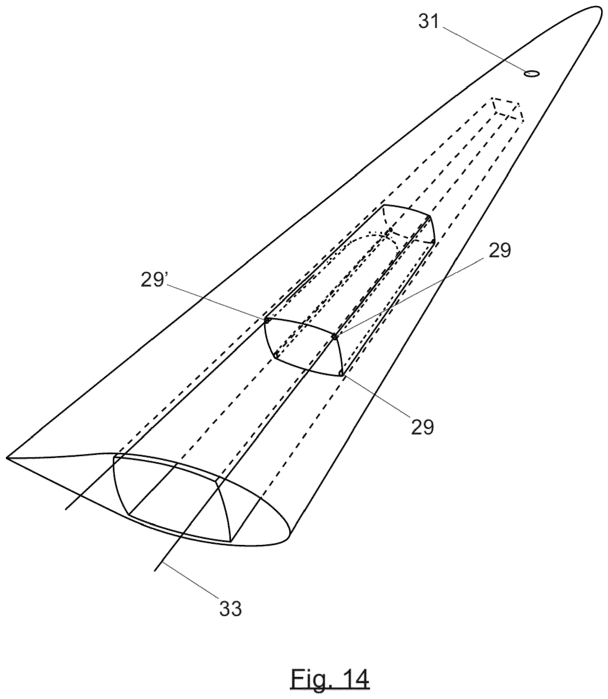

The cutting process of the adhesive layer attaching the balancing block (21) to the wall of the beam (3) can also be performed as follows:
1.- through holes (29-29') are made at the vertices of a face of the balancing block (21) by means of an incandescent rod (30), a laser or any other method.
2.- a hole (31) is made at the tip of the blade.
3.- a rod (32) is introduced through the tip of the blade, figure 12, passing the block through one of the holes (29) made in step (1)
4.- the rod (32) is removed through the root of the blade where it is attached to a wire (33) with the capacity of turning incandescent at a segment or section thereof.
5.- the rod (32) is pulled in the direction "D" until removing an end of the wire (33) through the tip of the blade.
6.- the rod (32) is introduced from the root of the blade, the block is passed through the other hole (29') until the rod (32) is removed through the hole (31).
7.- the rod (32) is fastened to the end of the wire (33) which is left loose at the tip of the blade in step 5.
8.- the rod (32) is pulled from the root so as to make the wire (33) pass through the hole (29'), figure 13.
9.- once the block is surrounded by the wire at the upper surface thereof, the wire section which is between the holes (29 and 29') at the block surface being nearest to the tip of the blade, is rendered incandescent by using an electric resistance.
10.- the ends of the wire (33) are pulled from the root, in a direction towards the root and upwards so that the incandescent section of the wire, figure 14, progressively cuts the adhesive attaching the block to the inner surface of the beam.
11.- The process is repeated for the other three surfaces attaching the block to the beam.

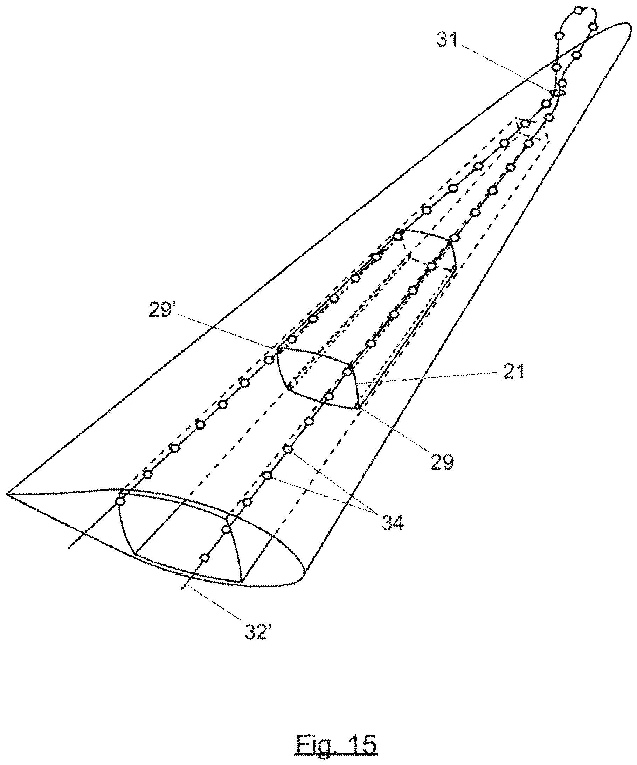

According to a possible embodiment, the wire being used for cutting the adhesive is made up of a resistant wire (32'), figure 15, for example, a nylon rope or wire, including knots (34) or abrasive balls being engaged therein.

Once the wire is installed as described in steps 1 to 8 of the previous method, a loop is formed by joining both ends and it is passed through the edge of a wheel or sheave (35) having notches to receive the knots or balls so that, by the rotation thereof, a rotating loop is generated as if it was a chain transmission. The assembly wheel-axis moves along as the cutting proceeds and it is kept tense by means of an actuating means (36), such as a spring, which guarantees the loop is always tense and that the required friction is produced in the other end so that it cuts the adhesive layer.

Cutting of the adhesive layer for all the block contour can be performed by using laser acting from the block surface which is oriented towards the root of the blade.

Finally, the balancing block (21) detachment can be carried out by applying heat onto the surfaces of said block as follows.

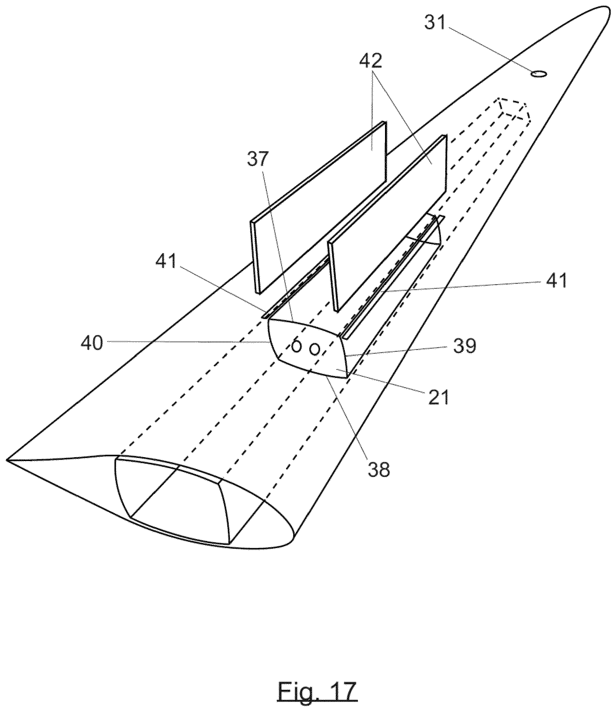

Heat is applied on two of the surfaces (37 and 38) directly through the section of the upper and lower shell of the beam walls, until heating the adhesive enough to reach degradation. For the other two surfaces (39 and 40) some grooves (41) will be made in one of the shells for introducing heating plates (42) transmitting heat through the walls (39 and 40) of the beam, until heating the adhesive for degradation thereof, figure 17.

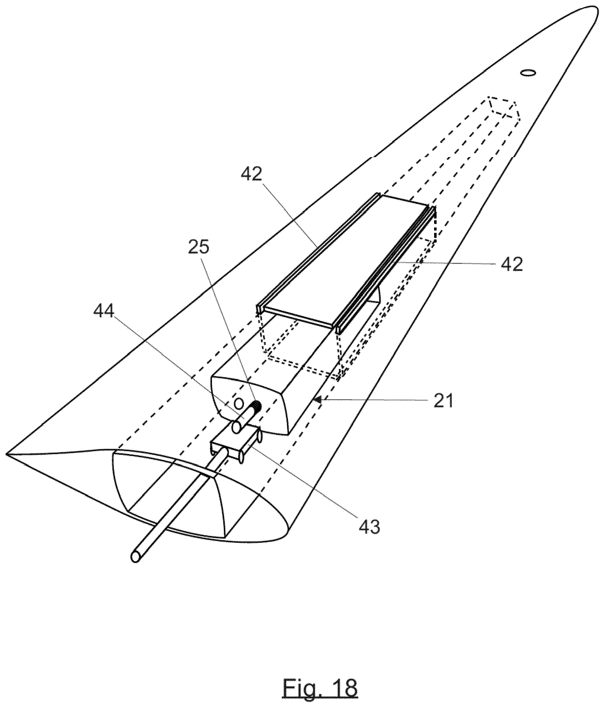

Once the adhesive has been degraded, the block is removed by fixing thereof to an element on which pulling can be applied from the blade, as for example a carriage (43) including a head with a screw or bolt (44) which is threaded on any of the through holes (25) the balancing block features. Then, the carriage is pulled from the open root of the blade, in order to remove it together with the block, as it is shown in figure 18.

The residues of the degraded adhesive can be removed by means of mechanical brushing or by other cleaning methods using pressurized water or solvent.

## Claims

1. Inner covering for wind turbine blades, made up of fabrics or layers of composite materials, based on glass or carbon fibre and resins, without being cured or being only partially cured, **characterized in that** it consists of a single piece-cover (5) with a flexible wall, constituted by composite materials based on glass or carbon fibres and resins, having shapes and dimensions which are approximately the same as those of the inner area of the blade structural element and open at the root thereof.

2. Covering according to claim 1, **characterized in that** the cover is longitudinally made up of at least two parts (6 and 7).

3. Covering according to the previous claims, **characterized in that** the cover wall extends from the root in a portion which is folded outwardly, forming a neck or outer peripheral channel being dimensioned for coupling onto the edge of the blade wall.

4. Method for applying the inner covering of claims 1 to 3 in a wind turbine blade, **characterized in that** it comprises:
a) forming onto a pre-forming mould (8) a flexible wall cover (5), by means of pre-cut fabrics or layers of composite materials, based on glass or carbon fibre and resins without being cured or being only partially cured, having shapes and dimensions which are approximately the same as those of the inner area of the blade structural element (3);
b) preparing the inner surface of the structural element by introducing an implement (11) having blasting (12) and cleaning (13) nozzles so as to form a clean and rough surface which favours adhesiveness of the covering made up by the covers (5);
c) mounting the cover (5) in a support or implement (16); which is introduced with said cover inside the blade through the open root (2) thereof, until it reaches the tip of the blade;
d) arranging between the support or implement (16) and the cover (5) an inflatable chamber (18), capable of reaching, when inflated, the inner shapes and dimensions of the blade structural element;
e) introducing the support, with the cover and the inflatable chamber, inside the blade structural element, through the open root thereof, and inflating the chamber until the cover is applied onto the inner surface of the blade structural element;
f) performing curing and hardening of the composite materials forming the cover, and the adherence thereof onto the inner surface of the blade structural element.

5. Method according to claim 4, **characterized in that** an outer peripheral channel (10) is formed in the root of the cover (5), as an extension of said cover wall, which couples onto the edge of the blade wall limiting the open root (2) thereof, thus overlapping the outer surface of the blade wall in a length being enough for the blade connecting bolts to go therethrough.

6. Method according to claims 4 to 5, **characterized in that** the cover comprises at least two longitudinally parts (6 and 7), attached to each other.

7. Method according to claims 4 to 6, **characterized in that** the implement or support (16), with the cover (5) or cover parts (6 and 7) and with the inflatable chamber, is moved along the blade by pulling with cables (14) which are passed to the outside through orifices (15) made in the blade tip.

8. Method according to claims 4 to 7, **characterized in that** the cover is formed onto the inner surface of the blade structural element, onto which the fabrics or layers forming said cover are applied, and these are compacted by means of the inflatable chamber, introduced in the blade through the open root thereof.

9. Method according to claims 4 to 8, **characterized in that** attaching the cover to the inner surface of the blade is performed by means of the adhesive which is included in the composite materials forming the fabrics or layers.

10. Method according to claims 4 to 9, **characterized in that** a reinforcing adhesive is also applied for attaching the cover to the inner surface of the blade.

11. Method according to claims 4 to 10, **characterized in that,** in blades whose structural element is provided with a balancing block, before introducing the support, with the cover and inflatable chamber, inside the blade structural element, the balancing block (21) is removed from inside said structural element.

12. Method according to claim 4, **characterized in that** curing and hardening of the composite materials forming the cover is performed by hot air blowing through the open root of the blade.

13. Method according to claim 4, **characterized in that** curing and hardening of the composite materials forming the cover (5) is performed using electric heating blankets arranged between the inflatable chamber (18) and the composite material fabrics forming said cover (15).

14. Method according to claim 4, **characterized in that** curing and hardening of the composite materials forming the cover (5) is performed by means of electric heating blankets arranged on the shells (4) in the adherence area of the structural element (3).

15. Method according to claim 11, **characterized in that** removal of the balancing block is performed by detaching thereof from the inner surface of the blade structural element, by applying heat onto the faces of said block, and pulling the block through the open root of the blade.

16. Method according to claim 11, **characterized in that** removal of the balancing block is performed by cutting the adhesive layer attaching the balancing block to the walls of the blade structural element and by subsequently pulling said block through the open root of the blade.
